# EUROPÄISCHE PATENTSCHRIFT

(11) **EP 1 305 135 B1**
(45) Veröffentlichungstag und Bekanntmachung des Hinweises auf die Patenterteilung: **19.05.2004**
(21) Anmeldenummer: 01962589.6
(22) Anmeldetag: 02.08.2001
(51) Int. Cl.: B23P 19/00, B21J 15/32

(54) **VORRICHTUNG UND VERFAHREN ZUM LADEN EINES NIETMODULS MIT BLINDNIETMUTTERN**
DEVICE AND METHOD FOR LOADING A RIVET MODULE WITH BLIND RIVET NUTS
PROCEDE ET DISPOSITIF POUR CHARGER UN RIVET MODULAIRE AVEC DES ECROUS POUR RIVETS BORGNES

(30) Priorität: 04.08.2000 DE 20013585 U
(43) Veröffentlichungstag der Anmeldung: 02.05.2003
(73) Patentinhaber: AVDEL VERBINDUNGSELEMENTE GmbH, D-30851 Langenhagen (DE)
(72) Erfinder: KADDATZ, Uwe, 31303 Burgdorf (DE)
(74) Vertreter: Beck, Alexander
(86) Internationale Anmeldenummer: PCT/DE2001/002933
(87) Internationale Veröffentlichungsnummer: WO 2002/011943

(56) Entgegenhaltungen:
- EP-A- 0 587 916
- DE-A- 4 124 079
- DE-U- 29 902 398
- US-A- 2 687 233
- US-A- 4 705 201

## Beschreibung

Die vorliegende Erfindung betrifft eine Vorrichtung und ein Verfahren zum Laden eines vertikal zwischen einer unteren Setzstellung und einer oberen Ladestellung bewegbaren Nietmoduls mit Blindnietmuttern mit einer Nietzuführung.

Die Zuführung von Blindnietmuttern und insbesondere das Laden eines Nietmoduls mit diesen Blindnietmuttern ist immer noch problematisch. Die entsprechenden Vorrichtungen sind sehr komplex und damit sehr aufwendig zu warten und herzustellen oder arbeiten nicht hinreichend zuverlässig.

Es ist daher Aufgabe der vorliegenden Erfindung, eine derartige Vorrichtung zum Laden eines Nietmoduls mit Blindnietmuttern dergestalt weiterzubilden, daß die Konstruktion erheblich vereinfacht wird und in jeder beiliebigen Lage einsetzbar ist, und gleichzeitig eine hohe Betriebszuverlässigkeit erreicht wird, und gleichzeitig ein geeignetes Verfahren zum Laden eines Nietmoduls mit Blindnietmuttern anzugeben.

Erfindungsgemäß wird die vorliegende Aufgabe bei einer gattungsgemäßen Vorrichtung zum Laden eines Nietmoduls mit Blindnietmuttern dadurch gelöst, daß neben dem Nietsetzkopf ein Becher zur Aufnahme der Blindnietmuttern seitlich zwischen einer Stellung unter der Nietzuführung und einer Stellung unterhalb des in Ladestellung befindlichen Nietmoduls bewegbar angeordnet ist, wobei der Becher mit einem Klemmzylinder versehen ist.

Dabei ist es bevorzugt, daß die Nietzuführung als langes, gerades, senkrecht verlaufendes Rohr ausgebildet ist. Auf diese Weise wird die Zuführung der Nietmuttern weiter beschleunigt.

Weiter ist es besonders bevorzugt, daß sämtliche Antriebsvorrichtungen als Pneumatikzylinder ausgebildet sind. Auf diese Weise können die Kosten für die Teilebeschaffung und den Betrieb weiter minimiert werden.

Darüber hinaus ist es bevorzugt, daß der Becher mit lediglich zwei Schrauben an einem mit einem Pneumatikzylinder angetriebenen Schlitten befestigt ist. Auf diese Weise kann die Vorrichtung sehr schnell und einfach auf die Verarbeitung von Blindnietmuttern anderen Durchmessers umgerüstet werden.

Weiter können auch formschlüssige Blindnietmuttern verarbeitet werden, wenn diese durch geeignete Andruckstücke am Klemmzylinder im Becher ausgerichtet und dadurch dem Nietmodul lagerichtung zugeführt werden können.

Im folgenden wird ein Ausführungsbeispiel der vorliegenden Erfindung anhand der in der Anlage beigefügten Zeichnungen näher erläutert. Es zeigt:
Fig. 1 eine Schnittdarstellung der erfindungsgemäßen Vorrichtung in Grundstellung von vorne;

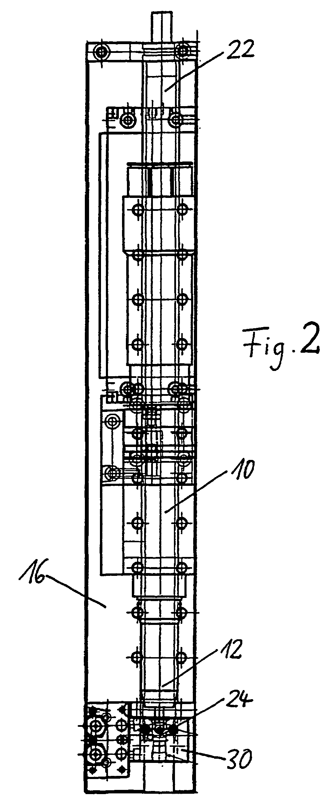

Fig. 2 die Vorrichtung der Fig. 1 in Grundstellung von der Seite; und

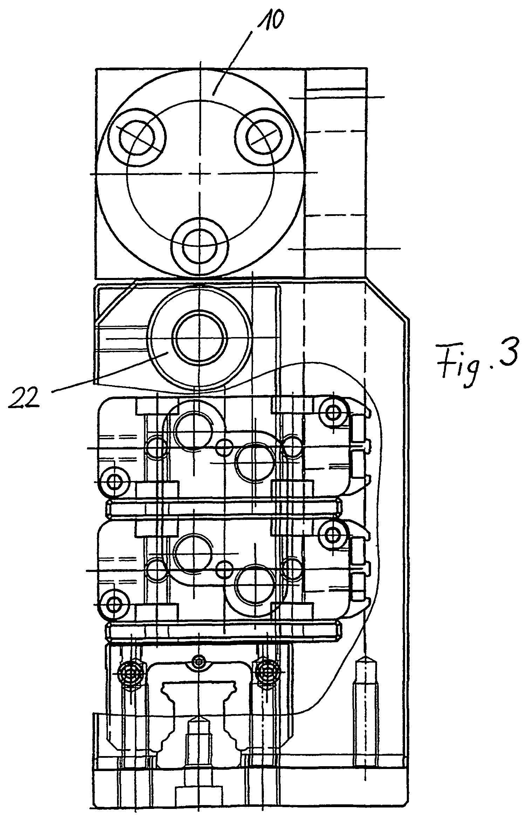

Fig. 3 die Vorrichtung der Fig. 1 von oben.

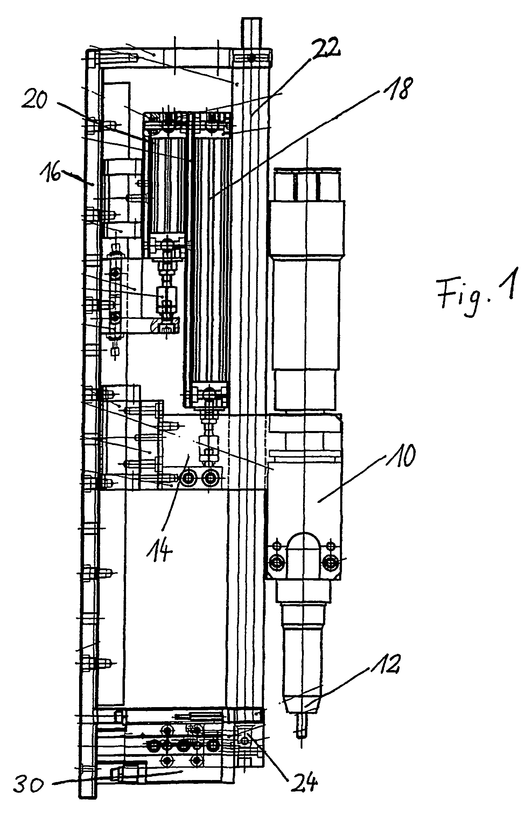

Fig. 1 zeigt eine Ausführungsform einer erfindungsgemäßen Vorrichtung in Grundstellung in Schnittdarstellung. Die erfindungsgemäße Vorrichtung umfaßt ein Nietmodul 10, welches mit einem Nietsetzkopf 12 zur Verarbeitung von Blindnietmuttern ausgerüstet ist. Das Nietmodul 10 ist mittels eines Schlittens 14 senkrecht auf- und abbewegbar an einem Grundgestell 16 gelagert. Der Schlitten 14 wird mittels der beiden Pneumatikzylinder 18, 20 auf- und abbewegt. Zwischen dem Nietmodul 10 und dem äußeren Pneumatikzylinder 18 ist ein starres, gerades, langes Rohr 22 angeordnet, dessen Innendurchmesser etwas größer ist, als der Außendurchmesser der Blindnietmuttern. Dieses Rohr 22 dient als Nietzuführung, die Blindnietmuttern werden aus einer handelsüblichen Vereinzelungsvorrichtung über eine normale Nietzuführung in das Zuführungsrohr 22 mittels Druckluft eingeblasen.

In der in Fig. 1 dargestellten Grundstellung befindet sich genau unterhalb des Zuführungsrohres 22 ein Becher 24, der zur Aufnahme der entsprechenden Blindnietmuttern geeignet ist. Der Becher 24 ist dabei mittels zweier Schrauben an einem mittels eines nicht dargestellten Pneumatikzylinders horizontal verschiebbaren weiteren Schlitten 30 befestigt. Der Becher 24 ist dabei mit einem Klemmzylinder versehen, durch den die Blindnietmuttern während des Aufspindelns auf den Nietsetzkopf 12 festgehalten werden können.

Im folgenden wird der Arbeitsablauf der erfindungsgemäßen Vorrichtung der Fig. 1 im einzelnen erläutert.

Wie schon gesagt, zeigt die Fig. 1 die Grundstellung der erfindungsgemäßen Vorrichtung bei Beginn der Arbeit. Der Becher 24 befindet sich dabei genau unter dem Zuführungsrohr 22, so daß nun die erste zu verarbeitende Blindnietmutter über das Rohr 22 zugeführt und in dem Becher 24 abgelegt werden kann. Durch Betätigung des Pneumatikzylinders 20 wird nun der Pneumatikzylinder 18, der an diesem befestigte Schlitten 14 und das Nietmodul 10 ein Stück angehoben.

Der Schlitten 30 wird nun nach außen gefahren, so daß der Becher 24 genau zentriert unter dem Nietsetzkopf 12 zu liegen kommt. Dabei wird die im Becher 24 liegende Blindnietmutter durch den Klemmzylinder festgehalten.

Der Pneumatikzylinder 20 wird nun wieder zusammengefahren, dadurch senkt sich das Nietmodul 10 auf die im Becher 24 befindliche Blindnietmutter, die durch den Klemmzylinder fixiert ist. Das Nietmodul 10 beginnt nun mit dem Aufspindeln der Mutter. Sobald dieser Vorgang beendet ist, wird der Klemmzylinder in dem Becher 24 geöffnet, das Nietmodul 10 fährt wiederum nach oben, so daß der Schlitten 30 mit dem Becher 24, der jetzt leer ist, wieder nach innen unter das Nietzuführungsrohr 22 bewegt werden kann. Sobald der Schlitten 30 auf diese Weise "aus dem Weg" gefahren ist, kann das Nietmodul, welches jetzt auf seinem Nietsetzkopf 12 die zu verarbeitende Blindnietmutter trägt, durch Zusammenfahren des Pneumatikzylinders 20 und durch Ausfahren des Pneumatikzylinders 18 in die Setzstellung gefahren werden, bei der das Nietmodul 10 ganz nach unten bewegt wird und weit über die untere Kante des Schlittens 30 hinausragt. Die Blindnietmutter kann nun gesetzt werden. Nach dem Setzen der Blindnietmutter wird der Pneumatikzylinder 18 wieder zusammengefahren, die Vorrichtung erreicht damit wieder die Grundstellung gemäß Fig. 1 und der nächste Verarbeitungszyklus kann beginnen. Sobald der Becher 24 an dem Schlitten 30 unter das Nietzuführungsrohr 22 zurückgefahren ist, kann bereits die nächste Blindnietmutter zugeführt und in den Becher 24 abgelegt und mit dem Klemmzylinder festgehalten werden.

Der große Vorteil der vorliegenden Erfindung liegt darin, daß diese mit einer geringeren Baugröße als die Geräte im Stand der Technik ausgeführt werden kann und dennoch eine dreimal so große nutzbare Hublänge ermöglicht. Erfindungsgemäß kann sämtliche Mechanik im Bereich der Antriebstechnik aus Standardpneumatikzylindern aufgebaut werden. Dadurch ergibt sich eine kürzere Lieferzeit für Ersatzteile und geringere Kosten für die Lagerhaltung der Ersatzteile. Des weiteren ist die erfindungsgemäße Vorrichtung erheblich leichter auf Blindnietmuttern eines anderen Durchmessers umzurüsten. Es müssen dazu nämlich lediglich zwei Zuführungsteile ausgetauscht werden, und zwar der Aufnahmebecher 24 und das Zuführungsrohr 22. Um ein besonders schnelles Auswechseln dieser Teile zu ermöglichen, genügt es erfindungsgemäß, wenn der Aufnahmebecher 24 mittels zweier Befestigungsschrauben und das Zuführungsrohr 22 mittels einer Klemmschraube an der Vorrichtung befestigt ist. Hierdurch werden die Umrüstzeiten auf ein Mindestmaß reduziert.

### BEZUGSZEICHENLISTE

- 10: Nietmodul
- 12: Nietsetzkopf
- 14: Schlitten
- 16: Grundgestell
- 18: Pneumatikzylinder
- 20: Pneumatikzylinder
- 22: Zuführungsrohr
- 24: Becher

## Patentansprüche

1. Vorrichtung zum Laden eines vertikal zwischen einer unteren Setzstellung und einer oberen Ladestellung bewegbaren Nietmoduls (10) mit Blindnietmuttern (100) mit einer Nietzuführung (22), **dadurch gekennzeichnet, daß** neben dem Nietsetzkopf (12) ein Becher (24) zur Aufnahme der Blindnietmuttern seitlich zwischen einer Stellung unter der Nietzuführung (22) und einer Stellung unterhalb des in Ladestellung befindlichen Nietmoduls (10) bewegbar angeordnet ist, wobei der Becher (24) mit einem Klemmzylinder zum Festklemmen der im Becher (24) befindlichen Blindnietmuttern versehen ist.

2. Vorrichtung nach Anspruch 1, **dadurch gekennzeichnet, daß** die Nietzuführung (22) als langes, gerades, senkrecht verlaufendes Rohr ausgebildet ist.

3. Vorrichtung nach Anspruch 1 oder 2, **dadurch gekennzeichnet, daß** sämtliche Antriebsvorrichtungen (18, 20) als Pneumatikzylinder ausgebildet sind.

4. Vorrichtung nach einem der Ansprüche 1 bis 3, **dadurch gekennzeichnet, daß** der Becher (24) mit lediglich zwei Schrauben an einem mit einem Pneumatikzylinder angetriebenen Schlitten (30) befestigt ist.

5. Verfahren zum Laden eines vertikal zwischen einer unteren Setzstellung und einer oberen Ladestellung bewegbaren Nietmoduls (10) mit Blindnietmuttern (100) mit einer Nietzuführung (22), **dadurch gekennzeichnet, daß** die Blindnietmuttern (100) in einem neben dem Nietmodul (10) angeordneten Becher (24) abgelegt werden, der Becher (24) von der Seite unter das zurückgefahrene Nietmodul (10) bewegt wird, das Nietmodul (10) vorgefahren wird, und die in dem Becher (24) befindliche Blindnietmutter (100) aufgespindelt wird, worauf das Nietmodul (10) wieder zurückgefahren wird und der Becher (24) wieder zur Seite geschwenkt wird, wobei die Blindnietmuttern (100) zumindest während des Aufspindelns durch einen am Becher (24) angeordneten Klemmzylinder festgehalten werden.

6. Verfahren nach Anspruch 5, **dadurch gekennzeichnet, daß** auch formschlüssige Blindnietmuttern durch geeignete Andruckstücke am Klemmzylinder im Becher (24) ausgerichtet werden und dadurch dem Nietmodul (10) lagerichtig zugeführt werden können.

## Claims

1. Apparatus for loading a riveting module (10), which can be vertically displaced between a lower placing position and an upper loading position with blind rivet nuts (100) using a rivet feed (22), **characterized in that** next to the riveting head (12) there is provided a cup (24) for receiving blind rivet nuts which is laterally displaceable between a position underneath the rivet feed (22) and a position underneath the riveting module (10) being in its loading position, wherein the cup (24) is having a clamping cylinder for clamping the blind rivet nuts contained in the cup (24).

2. Apparatus according to claim 1, **characterized in that** the rivet feed (22) is a long, straight, vertically extending tube.

3. Apparatus according to claim 1 or 2, **characterized in that** all motive means (18, 20) are performed as pneumatic cylinders.

4. Apparatus according to any of the claims 1 to 3, **characterized in that** the cup (24) is fixed to a slide (30) driven by a pneumatic cylinder by means of merely two screws.

5. A method for loading a riveting module (10), which is vertically displaceable between a lower placing position and an upper loading position with blind rivet nuts (100) by means of a rivet feed (22), **characterized in that** the blind rivet nuts (100) are deposited in a cup (24) provided next to the riveting module (10), that the cup (24) laterally is moved underneath the retracted riveting module (10), that the riveting module (10) is moved forward and that the blind rivet nut positioned in the cup (24) is screwed up, whereafter the riveting module (10) is retracted again and the cup (24) again is pivoted laterally, wherein the blind rivet nuts (100) at least during the screwing up are fixedly held by a clamping cylinder provided at the cup (24).

6. Method according to claim 5, **characterized in that** that positive grip blind rivet nuts, too, are oriented by suitable abutment pieces on the clamping cylinder in the cup (24) and thereby can be fed to the riveting module (10) in the correct position.

## Revendications

1. Dispositif pour charger un module de rivetage (10), déplaçable verticalement entre une position inférieure de pose et une position supérieure de charge, avec des écrous pour rivets borgnes (100) comportant une alimentation en rivets (22), **caractérisé en ce qu'**outre la tête de pose de rivet (12), est disposé déplaçable un godet (24) destiné à recevoir les écrous pour rivets borgnes sur le côté, entre une position située sous l'alimentation en rivets (22) et une position située au-dessous du module de rivetage (10) se trouvant en position de charge, le godet (24) étant pourvu d'un cylindre de serrage pour serrer les écrous pour rivets borgnes se trouvant dans le godet (24).

2. Dispositif selon la revendication 1, **caractérisé en ce que** l'alimentation en rivets (22) est réalisé comme tube long, droit, s'étendant verticalement.

3. Dispositif selon la revendication 1 ou 2, **caractérisé en ce que** tous les dispositifs d'entraînement (18, 20) sont réalisés sous la forme de vérins pneumatiques.

4. Dispositif selon l'une des revendications 1 à 3, **caractérisé en ce que** le godet (24) est fixé avec seulement deux vis sur un chariot (30) entraîné par un vérin pneumatique.

5. Procédé de chargement pour charger un module de rivetage (10), déplaçable verticalement entre une position inférieure de pose et une position supérieure de charge, avec des écrous pour rivets borgnes (100) comportant une alimentation en rivets (22), **caractérisé en ce que** les écrous pour rivets borgnes (100) sont déposés dans un godet (24) disposé à côté du module de rivetages (10), le godet (24) est déplacé depuis le côté sous le module de rivetage (10) reculé, le module de rivetage (10) est avancé, et les écrous pour rivets borgnes (100) se trouvant dans le godet (24) sont embrochés, après quoi le module de rivetage (10) est à nouveau reculé et le godet (24) à nouveau pivoté vers le côté, les écrous pour rivets borgnes (100) étant maintenus fermement, au moins pendant l'embrochage, par un cylindre de serrage disposé sur le godet (24).

6. Procédé selon la revendication 5, **caractérisé en ce que** des écrous pour rivets borgnes de forme complémentaire sont également orientés par des pièces de pression appropriées sur le cylindre de serrage dans le godet (24), et peuvent de ce fait être amenés dans une position correcte au module de rivetage (10).
